# EUROPEAN PATENT SPECIFICATION

(11) **EP 0 740 636 B1**
(45) Date of publication and mention of the grant of the patent: **10.09.1997**
(21) Application number: 95907571.4
(22) Date of filing: 20.01.1995
(51) Int. Cl.: B65D 81/38, A47G 23/04, A47J 47/14, B65D 21/02, B65D 71/00

(54) **THERMALLY INSULATED TRANSPORTABLE, REUSABLE CONTAINER FOR PIZZAS, PIES AND THE LIKE**
THERMISCH ISOLIERTER, TRANSPORTIERBARER, WIEDERVERWENDBARER BEHÄLTER FÜR PIZZA, TORTEN UND DERGLEICHEN
RECIPIENT REUTILISABLE, TRANSPORTABLE, CALORIFUGE, POUR PIZZAS, TARTES ET SIMILAIRE

(30) Priority: 27.01.1994 IT MI940134
(43) Date of publication of application: 06.11.1996
(73) Proprietor: Ghirardi, Marco, 27028 San Martino Siccomario (IT)
(72) Inventor: Ghirardi, Marco, 27028 San Martino Siccomario (IT)
(74) Representative: Petruzziello, Aldo
(86) International application number: EP9500203
(87) International publication number: WO9520535

(56) References cited:
- EP-A- 0 409 731
- DE-C- 209 439
- FR-A- 1 146 291
- US-A- 3 335 846
- US-A- 3 442 433
- US-A- 3 484 015
- US-A- 4 058 214
- US-A- 4 071 160
- US-A- 4 237 171
- US-A- 4 476 989
- US-A- 4 883 195
- US-A- 4 886 179

## Description

The present invention concerns a transportable thermally insulated container of a reusable type, particularly suitable for conveying pizzas, pies and the like.

In the art of food containers different articles suitable for the purpose are known. In particular there are containers specially studied and designed to convey take-away pizzas, pies, and the like. Known and commonly used for this purpose are parallelepiped-shaped cardboard boxes with relatively little thickness compared to the base measurements. Each pizza is placed while still hot inside the box which in turn is closed and possibly placed on top of other boxes containing pizzas to be taken away. Although said form of container is certainly economical and relatively practical, it nevertheless has characteristics that could certainly be improved.

In the first place, the above container is not hygienically safe as the cardboard folded so as to form a box is certainly in contact during formation and storage with a dirty environment that is not hygienically controlled.

In the second place, said cardboard container does not guarantee sufficient thermal insulation, dispersing the heat of the food contained inside it in a very short time, to the detriment of the quality of the food transported. In this respect, a large amount of heat is also known to be lost on transferring the pizza from the container to the dish (which is at a lower temperature than the pizza), since it is impossible to use the container itself as the dish from which to eat the pizza.

In the third place said container is not reusable and its disposal is inconvenient, bulky and costly.

In the fourth place said container is not waterproof. In addition the porosity of the material (usually cardboard) from which the box is made and the absence of a seal, permits the release of greasy unpleasant smelling gasses that will persist for a long time inside the vehicles used for transport.

Lastly, said container is not aesthetically pleasing.

US-A-3 484 015 describes a container according to the preamble of claim 1, comprising a base and a top formed by a plastic material, such as pressed polystyrene beads that form a relatively porous, lightweight and sturdy article having a uniform density of the material from the inside to the outside.

No other types of containers for the specific purposes indicated above are known to the applicant.

The aim of the present invention is therefore to provide a container that overcomes all the drawbacks mentioned and in particular that is a transportable, reusable, ecological and thermally-insulated container for the transport of pizzas, pies, and the like.

The container of the present invention, in the general form of embodiment, has the characteristics listed in the attached claim 1. Preferred embodiments of the invention are disclosed in the dependent claims.

The characteristics, aims and advantages of the invention will become clearer from the description that follows and from the attached drawings concerning non-limiting exemplary embodiments in which:
- Figure 1 is a somewhat schematic side view of four containers according to a preferred embodiment of the present invention, stacked and inserted in the basket that facilitates their transport;
- Figure 2 is top view ofFigure 1;
- Figure 3 is a partial sectional view of a container according to such preferred embodiment of the invention;
- Figure 4 is a plan view ofthe base ofthe container in Figure 3;
- Figure 5 is a partial sectional view of a container according to an alternative embodiment of the invention;
- Figure 6 is a top plan view of the container in Figure 5;
- Figure 7 is a side view of the container in Figure 5.

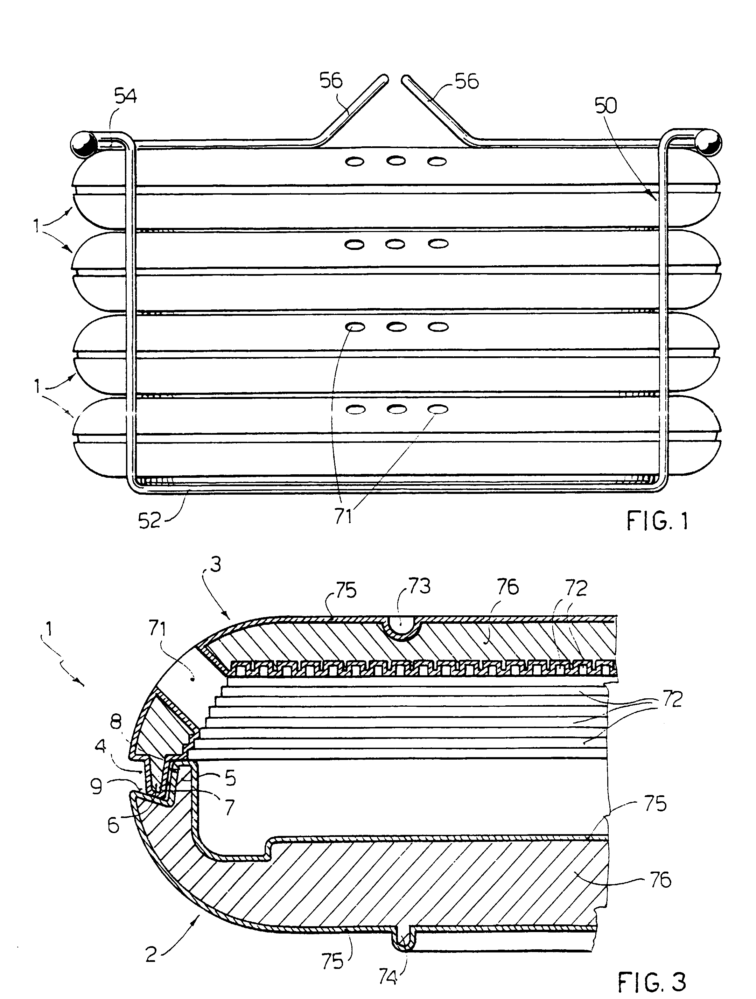

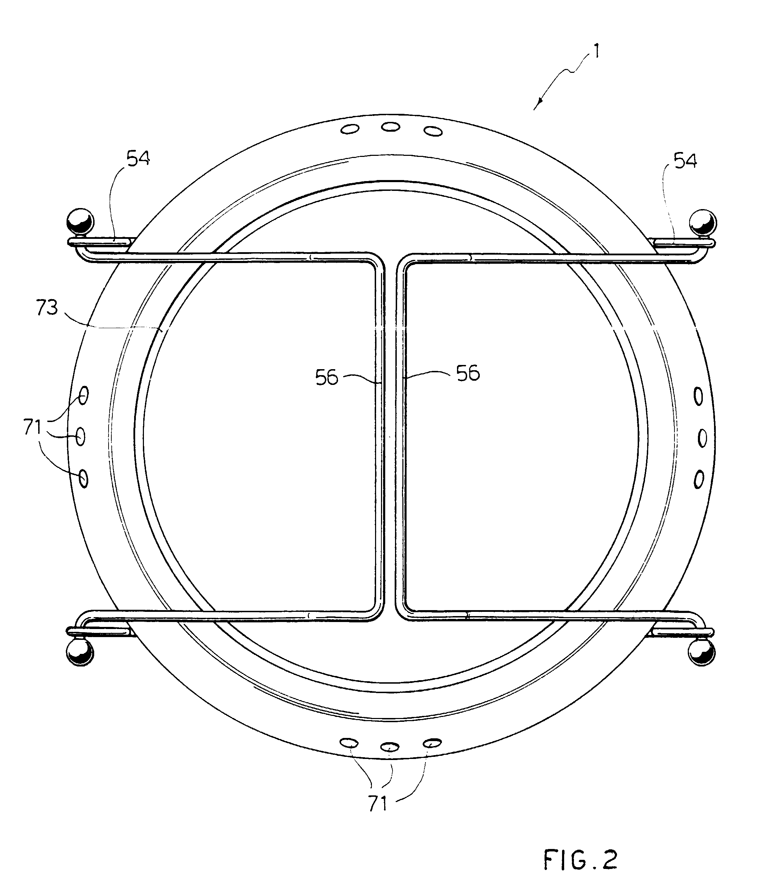

With reference first to Figures 1 to 4, the preferred embodiment of the thermally insulated reusable container for take-away pizza according to the invention will be described.

Said container is substantially discoid in shape, with rounded edges, and has been indicated as a whole by reference number 1. It is hollow on the inside and consists of a base 2 and a lid 3, that can be placed on the base so as to leave a groove 4 around the circumference, midway up the container, that allows the lid to be raised lifted during opening and closing.

The rounded shape of the periphery, that is the same for the base 2 and the lid 3, is the result of an ergonomic study that ensures an easy, secure grip on the container.

Inside said groove 4, the base and the lid 3 have respective annular protrusions 5 and 6, with respective conjugate conical surfaces 7 and 8, which bring about simple and efficient closing, with automatic centring of the lid on the base, whatever the position of the elements with respect to each other.

The closure thus obtained is able to ensure that the container remains sealed when it is inclined up to 80° with respect to the horizontal position.

Moreover, the edge 9 of the base 2, outside the projecting part 5, is made to slope in the opposite direction, so that it retains any oil that escapes from the closure in the event of the container being tipped.

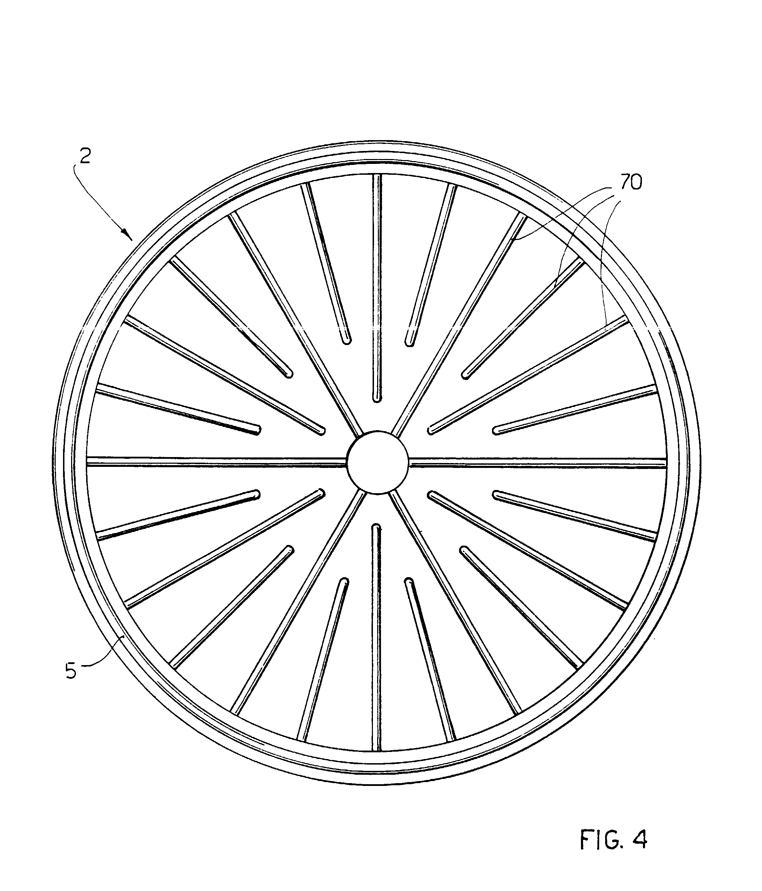

The inner surface of the base 2 has a radial series of projections 70 that are advantageously disposed on the intermediate portions between the centre and the periphery of the circular base 2, as is shown more clearly in Figure 4.

These projections 70 create a large area of separation beneath the food that is placed on top of them. This expedient on the one hand improves condensation and on the other hand creates a ventilating effect that removes the steam present there.

The lid 3 has a series of holes or slits 71 on its peripheral to evacuate the steam given off by the food.

In addition, the inner surface of the lid 3 is completely channelled with close circular concentric grooves 72 that minimise condensation build-up.

The container 1, when closed, has a somewhat flattened shape, with a space inside suitable for accommodating a typical pizza, with filling, leaving an adequate margin for evacuation of steam.

In order to allow stacking of a number of containers 1, a circular groove 73 has been made on the upper surface of the lid and a corresponding circular projection 74, of a suitable size to be able to enter a corresponding groove 73, is provided on the lower surface of the base 2, so that they can fit easily one inside the other. These container coupling elements come apart only if the containers are tipped at angle of more than about 80° from the horizontal position.

Both the base 2 and the lid 3 of the container 1 according to this preferred embodiment of the invention are advantageously made from shock-resistant semifoamed polystyrene, with a clear differentiation in the density of the material which is hard and compact on the surface 75 and foamed and cellular on the inside 76. The product is thus provided with the necessary qualities of sturdiness and resistance to water and abrasion.

Some dimensions of the container are now given by way of example:

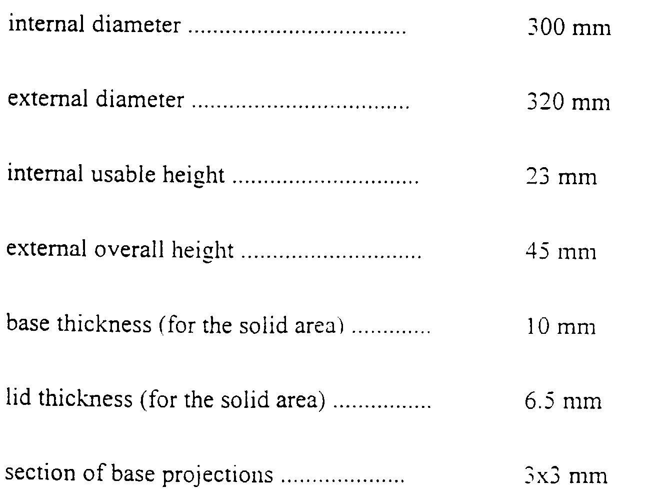

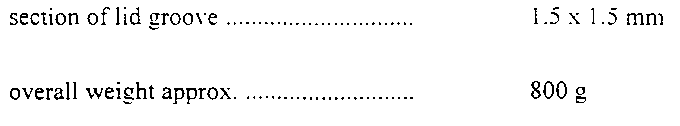

When the pizza is placed inside fresh from the oven, the container keeps it pleasantly hot and fragrant for at least 15 minutes, this being the average time required for the journey from pizzeria to home.

The condensation that deposits on the inner surface of the lid 3 is a negligible amount and in any case is so broken up as not to accumulate in any way into falling drops.

During consumption of the food, since the surface of the base 2 is considerably resistant to abrasion, it can be used as a dish, avoiding transfer of the food to other tableware.

The use of a single material to form the container 1 allows it to be easily recycled at the end of the article's useful life.

The material used, which in any case is not binding, makes is possible to have a product with good insulation and a relatively low weight.

The internal diameter of the container, indicated as about 300 mm, has been chosen so that it can contain a product (pizza) that is known to be highly uneven in shape and size.

Consequently, the external diameter of 320 mm is the optimum diameter to give sufficient insulation at the periphery, as well as to form the centring projections 5, 6 and the groove 4 for opening. A greater diameter would lead to an increase in the overall dimensions and weight of the container, while a smaller diameter would reduce insulation and could weaken the centring projections between lid and base.

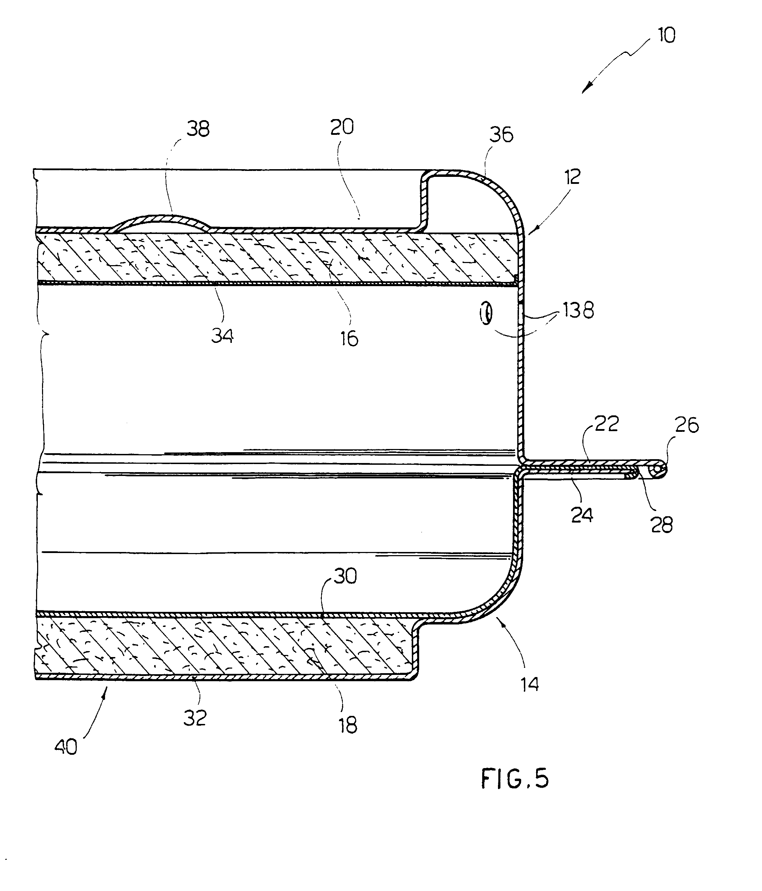

The overall section of the air-holes 71 is advantageously around 7 sq. cm., with a distribution along the periphery of the lid as shown in Figure 5. An increase in the overall section would cause a greater outlet of steam and therefore more rapid cooling of the contents, while a reduction in the overall section would cause the steam to stagnate inside the container, resulting in dampening of the food (which loses its fragrance) and a greater build-up of condensation on the inner surface of the lid.

Obviously only one pizza can be placed in a container 1. When more than one pizza is to be transported. the containers can be stacked thanks to the engagement of the projections 74 in the corresponding grooves 73.

In order to facilitate transport of a number of containers stacked on top of another, a special container carrying basket 50 has been created.

Said basket 50 is composed of a frame, preferably made of rods, for example of metal, that forms a cradle. The base 52 of said cradle supports the bottom of the base 2 of a container 1 on which a plurality of containers 1 can be stacked (the total number of stacked containers must preferably not be greater than four). At the upper extremities of said cradle -shaped frame a slot 54 is provided to insert, in a hinged manner, two handles 56 shaped in such a way that when they are grasped the stack of containers is kept pressed downward, allowing them no possibility, of moving.

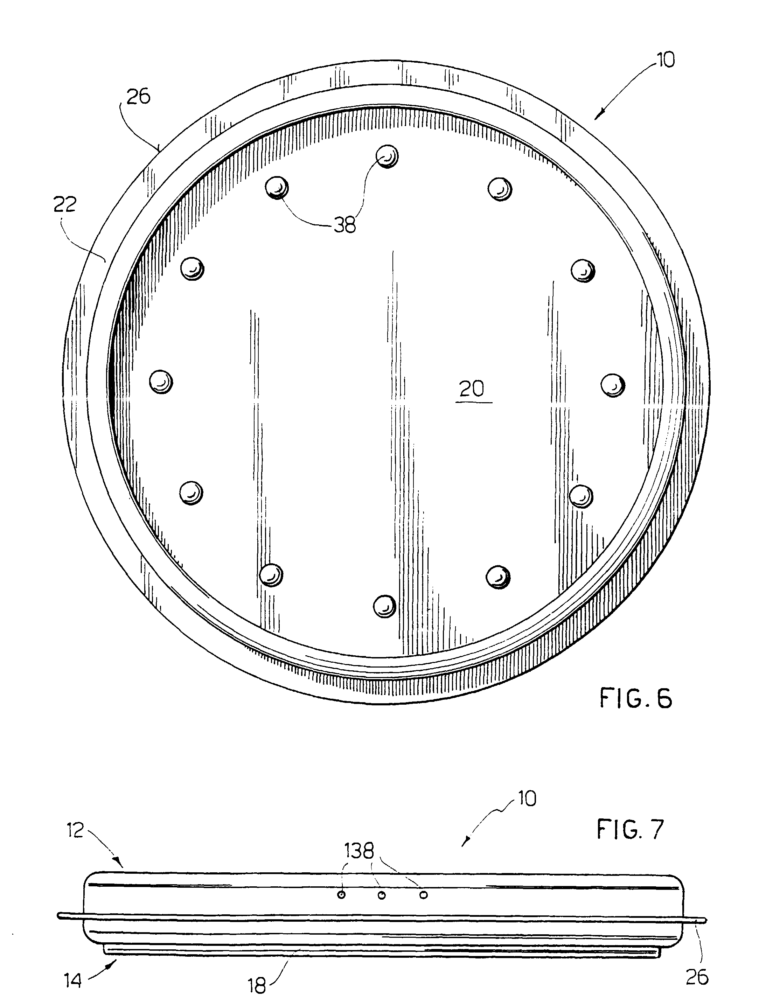

With reference to figures 5 to 7, an alternative embodiment of the container according to the invention, indicated as a whole by reference number 10 will now be described. It is substantially composed of a circular lid 12 and a corresponding circular base 14 that can be placed on top of each other: Said lid 12 and said base 14 have a flat projecting edge 22 and 24, respectively. In addition, locating means are provided to place said lid 12 correctly and unequivocally on said base 14. Said means advantageously consist of respective folded edges 26 and 28 that run around the entire internal perimeter of the protruding edges 22 and 24, a minimum gap being provided between said edges 26 and 28.

The structure of the circular base 14 consists, in detail, of a thin inner sheet 30, suitably shaped like a circular tray, preferably, shallow, and a thin outer sheet 32 that fits perfectly over the sheet 30 except at the bottom where a closed chamber 40 is formed. Said closed chamber 40 is filled, during its formation with a thermal-insulation material. preferably, for example, a foamed polyurethane disk that also helps to make the structure more rigid. Likewise, said lid 14 consists of a thin inner sheet 34, a thin outer sheet 36 and a layer of insulating material 16 placed between said sheets. The inner sheet 34 is disk-shaped and, in view of its scant structural importance, can be thinner than said outer sheet 36 of the lid. The latter is shaped so as to form an upper circular cavity 20 suitable for accommodating with minimum play the corresponding base projection 40 that encloses the insulating material 18 of the base. On the upper surface of the inside of the chamber 20, a plurality of bumps 38, seen better in Figure 3, are preferably provided so as not to permit a very extensive surface contact between the base and the lid of a plurality of containers placed one on top of the other. The inner surface of the lid, on the other hand, is advantageously flat and finely embossed. The flat wall guarantees uniform heat distribution, while the microporosity obtained through the embossing promotes vaporisation of the condensation, preventing large drops from forming and falling onto the food.

According to this invention too, ventilation holes 138 can be provided to allow evacuation of steam.

As can be easily imagined, the shallowness of the container 10 allows the food conveyed in it to be consumed directly on the bottom of the base 14 which therefore acts as a dish, avoiding further loss of heat.

It was not considered appropriate and advantageous to provide a more efficient closure between the two parts that form the container since, as is obvious, it is not possible to tip the container when a food, particularly pizza, is contained inside it.

The material from which said container 10 is constructed is metal, plastic, composite, ceramic or glass without distinction, although naturally metals and in particular stainless steel are hygienically and economically preferable; depending on the material used, the manufacturing method can be pressing, casting or blowing. Moreover it should be noted that the circular shape illustrated is purely by way of example and other shapes, particularly square, rectangular and elliptical, are likewise considered to be included in the inventive idea underlying the invention.

The particular shape described for the container 10 allows stacking of a plurality of containers that can be transported with the previously described basket 50.

It is therefore deduced from the preceding description that the invention fully achieves the proposed objectives and in particular it permits a transportable, reusable, thermally insulated container to be obtained for pizzas, pies and the like that is hygienic, ecological, waterproof, light, sturdy, functional, aesthetically pleasing and easily recyclable.

It is obvious that numerous changes, adaptations, integrations, variants and replacements of parts with others that are functionally equivalent could be made without departing from the sphere of protection of the claims that follow.

## Claims

1. A transportable, reusable container (1; 10) for pizzas, pies and the like, having a substantially flattened shape, comprising a base (2; 14) and a lid (3; 12), both thermally insulated and provided with locating means (5, 6; 28, 26) for self-centring of the lid on the base, said lid (3; 12) having air holes or slits (71; 138), characterized in that said base (2; 14) and said lid (3; 12) have a clear differentiation between the inside and the outside in the density of their material, providing a hard and compact surface layer (75; 30, 32, 34, 36).

2. A container according to claim 1, characterised in that it has reciprocal coupling means (73, 74; 20, 40), respectively on the outer surfaces of the lid (3; 12) and the base (2; 14), to allow a number of containers to be placed one on top of the other.

3. Container according to claim 1 or 2, characterised in that said base (2) and said lid (3) of the container (1) are made of plastic material, particularly shockproof semifoarned polystyrene, with a compact, hard surface layer (75) and a foamed inner layer (76), the base (2) and the lid (3) forming as they are coupled together a peripheral groove (4) midway up the container.

4. A container according to claim 3, characterised in that said centring locators (5, 6) are projections on the base (2) and the lid (3) respectively, disposed inside said groove and having respective conjugate conical surfaces (7, 8).

5. A container according to claim 4, characterised in that the outer edge (9) of the base (2) is shaped to slope in the opposite direction.

6. A container according to any one of claims 3 to 5, characterised in that projections (75) are provided on the inner surface of the base (2) and grooves (72) on the inner surface of the lid (3).

7. A container according to any one of claims 3 to 6, characterised in that said air-holes (71) are provided on the periphery of the lid (3) and said engagement means for stacking more than one container consist of a groove (73) made in the lid and a corresponding projection (74) made on the base, or vice versa.

8. A container according to claim 1 or 2, characterised in that said base (14) and said lid (12) of the container (10) have flat, outward projecting superimposable edges (24, 22), with respective folded peripheral edges (28, 26), between which a gap is provided, forming said locating means (28, 26).

9. A container according to claim 8, characterised in that said base (14) and said lid (12) consist of a thin outer sheet (32, 36) and a thin inner sheet (30, 34), a thermal-insulation layer (18, 16) being interposed in a sealed manner between said respective outer sheets (32, 36) and inner sheets (30, 34).

10. A container according to claim 9, characterised in that said thermal-insulation layer (18, 16) consists of a foamed polyurethane disc, said base (14) having a chamber (40) protruding downwards and filled with said thermal-insulation material (18) and said lid (12) having a cavity (20) corresponding to said protruding chamber (40) to allow a plurality of containers (10) to the stacked.

11. A container according to any one of claims 8 to 10, characterised in that the bottom of the chamber (20) has a plurality of upward projecting bumps (38).

12. A container according to any one of claims 8 to 11 characterised in that the inner sheet (34) of the lid (12) is flat and has undergone an embossing process, whilst at least the outer sheet (36) has said air-holes (138).

## Patentansprüche

1. Tragbarer, wiederverwendbarer Behälter (1; 10) für Pizza, Torten und dergleichen, mit im wesentlichen flacher Form, bestehend aus einem Unterteil (2; 14) und einem Deckel (3; 12), beide wärmeisoliert und mit Positionierungseinrichtungen (5, 6; 28, 26) für die Selbstzentrierung des Deckels auf dem Unterteil versehen, wobei der genannte Deckel (3; 12) Luftlöcher-und Schlitze (71; 138) aufweist, dadurch gekennzeichnet, daß der genannte Unterteil (2; 14) und der genannte Deckel (3; 12) in Hinblick auf die Dichte ihres Werkstoffs eine stark unterschiedliche Außen-und Innenseite aufweisen, wobei der Werkstoff eine harte und kompakte Oberflächenschicht (75; 30, 32, 34, 36) liefert.

2. Behälter gemäß Anspruch 1, dadurch gekennzeichnet, daß er auf dem Bogenrücken des Deckels (3; 12) bzw. des Unterteils (2; 14) mit Einrichtungen zur gegenseitigen Verbindung (73, 74; 20, 40) versehen ist, um es zu ermöglichen, mehrere Behälter übereinander zu stapeln.

3. Behälter gemäß Anspruch 1 oder 2, dadurch gekennzeichnet, daß der genannte Unterteil (2) und der genannte Deckel (3) des Behälters (1) aus Kunststoff hergestellt sind, im besonderen aus stoßfestem, halbgeschäumtem Polystyrol, mit kompakter und harter Oberflächenschicht (75) und innerer Schaumschicht (76) und daß der Unterteil (2) und der Deckel (3) bei der Verbindung entlang dem Umfang eine Aushöhlung (4) bilden.

4. Behälter gemäß Anspruch 3, dadurch gekennzeichnet, daß die genannten Zentriervorrichtungen (5, 6) im Inneren der genannten Aushöhlung angeordnete Vorsprünge des Unterteils (2) bzw. des Deckels (3) sind, die entsprechend kegelförmig geformte Oberflächen (7, 8) aufweisen.

5. Behälter gemäß Anspruch 4, dadurch gekennzeichnet, daß der Außenrand (9) des Unterteils (2) in Gegenneigung geformt ist.

6. Behälter gemäß einem beliebigen Anspruch der Ansprüche 3 bis 5, dadurch gekennzeichnet, daß auf der inneren Oberfläche des Unterteils (2) und Wülste (75), auf dem Boden des Deckels (3) Rillen (72) vorgesehen sind.

7. Behälter gemäß einem beliebigen Anspruch der Ansprüche 3 bis 6, dadurch gekennzeichnet, daß die genannten Luftlöcher (71) an der Umfangslinie des Deckels (3) vorgesehen sind, und daß die genannten Verbindungsvorrichtungen für das Übereinanderstapeln mehrerer Behälter aus einer in den Deckel gearbeiteten Rille (73) und einem entsprechenden Wulst (74) auf dem Unterteil, oder umgekehrt, bestehen.

8. Behälter gemäß Anspruch 1 oder 2, dadurch gekennzeichnet, daß der genannte Unterteil (14) und der genannte Deckel (12) des Behälters (10), flache, nach außen überstehende und übereinanderlegbare Ränder (24, 22) mit jeweils umgebogenen Außenkanten (28, 26) aufweisen, zwischen denen ein Spiel vorgesehen ist, die die genannten Verbindungsvorrichtungen (28, 26) bilden.

9. Behälter gemäß Anspruch 8, dadurch gekennzeichnet, daß der genannte Unterteil (14) und der genannte Deckel (12) aus einer äußeren Folie (32, 36) und einer inneren Folie (30, 34) und einer Wärmedämmschicht (18, 16) bestehen, die hermetisch dicht zwischen der genannten Außenfolie (32, 36) und der genannten Innenfolie ( 30, 34) eingefügt ist.

10. Behälter gemäß Anspruch 9, dadurch gekennzeichnet, daß die genannte Wärmedämmschicht (18, 16) aus einer Schaumpolystyrol-Scheibe besteht, der genannte Unterteil (14) eine nach unten vorspringende und mit dem genannten Wärmedämmstoff (18) gefüllte Kammer (40), und der genannte Deckel (12) eine der genannten vorspringenden Kammer (40) entsprechende Aushöhlung (20) aufweist, um mehrere Behälter (10) aufeinander stapeln zu können.

11. Behälter gemäß einem beliebigen Anspruch der Ansprüche 8 bis 10, dadurch gekennzeichnet, daß der Boden der Aushöhlung (20) zahlreiche Erhebungen (38) aufweist.

12. Behälter gemäß einem beliebigen Anspruch der Ansprüche 8 bis 11, dadurch gekennzeichnet, daß die innere Folie (34) des Deckels (12) flach und gaufriert ist, während zumindest die äußere Folie (36) Luftlöcher (138) aufweist.

## Revendications

1. Conteneur transportable et réutilisable (1; 10) pour pizzas, fougasses et produits analogues, ayant une forme substantiellement plate, comprenant une base (2; 14) et un couvercle (3; 12), tous les deux à isolation thermique et munis d'éléments de positionnement (5, 6; 28, 26) pour le centrage automatique du couvercle sur la base, ledit couvercle (3; 12) présentant des trous ou des fentes d'évent (71; 138), caractérisé par le fait que ladite base (2; 14) et ledit couvercle (3; 12) présentent une différence évidente entre l'intérieur et l'extérieur en ce qui concerne la densité de leur matériau, qui fournit une couche de surface dure et compacte (75; 30, 32, 34, 36).

2. Conteneur selon la revendication 1, caractérisé par le fait qu'il présente des éléments d'accouplement réciproques (73, 74; 20, 40) respectivement sur les extrados du couvercle (3; 12) et de la base (2; 14), pour permettre la superposition de plusieurs conteneurs.

3. Conteneur selon la revendication 1 ou 2, caractérisé par le fait que ladite base (2) et ledit couvercle (3) du conteneur (1) sont réalisés en matière plastique, en particulier en polystyrène antichoc semi-expansé, avec une couche superficielle (75) compacte et dure et une couche intérieure (76) expansée, la base (2) et le couvercle (3) déterminant lors de l'accouplement un creux sur le périmètre (4), situé à mi-hauteur du conteneur.

4. Conteneur selon la revendication 3, caractérisé par le fait que lesdites butées de centrage (5, 6) sont des éléments dépassant respectivement de la base (2) et du couvercle (3), disposés dans le creux, et présentant des surfaces respectives coniques conjuguées (7, 8).

5. Conteneur selon la revendication 4, caractérisé par le fait que le bord extérieur (9) de la base (2) a une forme en contre-pente.

6. Conteneur selon une revendication quelconque des revendications de 3 à 5, caractérisé par le fait que des reliefs (75) sont prévus sur la surface interne de la base (2) et des rainures (72) sur la partie supérieure du couvercle (3).

7. Conteneur selon une revendication quelconque des revendications de 3 à 6, caractérisé par le fait que les évents (71) sont prévus sur la surface du couvercle (3), et que les éléments d'engagement pour la superposition de plusieurs conteneurs sont formés par une rainure (73) réalisée dans le couvercle et par un relief correspondant (74) présent sur la base, ou vice versa.

8. Conteneur selon la revendication 1 ou 2, caractérisé par le fait que ladite base (14) et ledit couvercle (12) du conteneur (10) présentent des bords plats dépassant à l'extérieur et superposables (24, 22), leurs bords périmétriques étant repliés (28; 26), entre lesquels est prévu un jeux, qui constituent les éléments de butée (28, 26).

9. Conteneur selon la revendication 8, caractérisé par le fait que ladite base (14) et ledit couvercle (12) sont formés par une lame extérieure (32, 36) et par une lame intérieure (30, 34), une couche thermo-isolante (18, 16) étant respectivement interposée et scellée entre les lames extérieures (32, 36) et intérieures (30, 34) respectives.

10. Conteneur selon la revendication 9, caractérisé par le fait que ladite couche thermo-isolante (18, 16) est formée par un disque de polyuréthanne expansé, ladite base (14) présentant une chambre (40) dépassant vers le bas et remplie du dit matériau thermo-isolant (18) et ledit couvercle (12) présentant une cavité (20) correspondant à la chambre (40) qui dépasse pour permettre à plusieurs conteneurs (10) d'être empilés.

11. Conteneur selon une revendication quelconque des revendications de 8 à 10, caractérisé par le fait que le fond de la cavité (20) présente plusieurs bossages (38) dépassant vers le haut.

12. Conteneur selon une revendication quelconque des revendications de 8 à 11, caractérisé par le fait que la lame intérieure (34) du couvercle (12) est plate et soumise à un usinage de gaufrage, tandis qu'au moins la lame extérieure (36) présente lesdits évents (138).
